# FASCICULE DE BREVET EUROPEEN

(11) **EP 3 319 972 B1**
(45) Date de publication et mention de la délivrance du brevet: **25.12.2019**
(21) Numéro de dépôt: 16736135.1
(22) Date de dépôt: 06.07.2016
(51) Int. Cl.: C07F 9/12, C08L 9/06, C08C 19/24, C08F 8/40, B60C 1/00, C08F 36/14

(54) **COMPOSITION DE CAOTCHOUC COMPRENANT UN COMPOSÉ 1,3-DIPOLAIRE PORTANT UN GROUPE PHOSPHORÉ ET UN DIPÔLE CONTENANT UN ATOME D'AZOTE**
GUMMIZUSAMMENSETZUNG MIT EINER 1,3-DIPOLARE VERBINDUNG MIT EINER PHOSPHORHALTIGEN GRUPPE UND DIPOL MIT EINEM STICKSTOFFATOM
RUBBER COMPOSITION COMPRISING AN 1,3-DIPOLAR COMPOUND BEARING A PHOSPHORUS-CONTAINING GROUP AND A DIPOLE CONTAINING A NITROGEN ATOM

(30) Priorité: 10.07.2015 FR 1556565
(43) Date de publication de la demande: 16.05.2018
(73) Titulaire: Compagnie Générale des Etablissements Michelin, 63000 Clermont-Ferrand (FR)
(72) Inventeur: IVANOV, Sergey, 63040 Clermont-Ferrand Cedex 9 (FR); RANNOUX, Claire, 1020 Genève (CH); THUILLIEZ, Anne-Lise, 63040 Clermont-Ferrand Cedex 9 (FR); SALIT, Anne-Frédérique, 63040 Clermont-Ferrand Cedex 9 (FR)
(74) Mandataire: Gandon-Pain, Sylvie
(86) Numéro de dépôt international: PCT/EP2016/066018
(87) Numéro de publication internationale: WO 2017/009150

(56) Documents cités:
- WO-A1-2005/110401
- WO-A1-2012/007442
- WO-A1-2015/059269
- WO-A1-2015/121228
- NICOLAS BÉZIÈRE ET AL: "Metabolic stability of superoxide adducts derived from newly developed cyclic nitrone spin traps", FREE RADICAL BIOLOGY AND MEDICINE, vol. 67, 1 février 2014 (2014-02-01), pages 150-158, XP055270905, US ISSN: 0891-5849, DOI: 10.1016/j.freeradbiomed.2013.10.812
- E. BOYLAND ET AL: "Arylhydroxylamines. III. Reactions with aldehydes", JOURNAL OF THE CHEMICAL SOCIETY, 1 janvier 1963 (1963-01-01), pages 3141-3144, XP055270945, LETCHWORTH; GB ISSN: 0368-1769, DOI: 10.1039/jr9630003137
- COURME C ET AL: "Terminal alkyne-functionalized triazine by Sonogashira coupling: synthesis of a potential cell signalling inhibitor via click chemistry", TETRAHEDRON LETTERS, PERGAMON, GB, vol. 49, no. 29-30, 21 juillet 2008 (2008-07-21), pages 4542-4545, XP022713199, ISSN: 0040-4039, DOI: 10.1016/J.TETLET.2008.05.050 [extrait le 2008-05-14]
- ZI QIANG GU ET AL: "Synthesis and evaluation of imidazo[1,5-a][1,4]benzodiazepine esters with high affinities and selectivities at "diazepam-insensitive" benzodiazepine receptors", JOURNAL OF MEDICINAL CHEMISTRY, vol. 36, no. 8, 1 avril 1993 (1993-04-01), pages 1001-1006, XP055270953, US ISSN: 0022-2623, DOI: 10.1021/jm00060a007
- DEROUET D ET AL: "FLAME-RESISTANCE AND THERMAL STABILITY OF 1,4-POLYDIENES MODIFIED BY DIALKYL(OR ARYL) PHOSPHATES", RAPRA ABSTRACTS, RAPRA TECHNOLOGY LTD., SHREWSBURY, GB, vol. 33, no. 12, 1 décembre 1996 (1996-12-01), page 83, XP000643586, ISSN: 0033-6750
- NIELS AKEROYD ET AL: "The combination of living radical polymerization and click chemistry for the synthesis of advanced macromolecular architectures", EUROPEAN POLYMER JOURNAL, PERGAMON PRESS LTD. OXFORD, GB, vol. 47, no. 6, 5 février 2011 (2011-02-05), pages 1207-1231, XP028209519, ISSN: 0014-3057, DOI: 10.1016/J.EURPOLYMJ.2011.02.003 [extrait le 2011-02-12]

## Description

Le domaine de la présente invention est celui des agents de modification destinés à fonctionnaliser des polymères insaturés le long de la chaîne polymère.

L'invention est définie dans et par les revendications annexées.

La modification de la structure chimique d'un polymère impacte généralement les propriétés chimiques et physiques du polymère, ainsi que les propriétés des compositions le contenant. La modification de structure d'un polymère, telle que la fonctionnalisation d'un polymère, est particulièrement recherchée lorsque l'on souhaite mettre en présence un polymère et une charge dans une composition. La modification chimique d'un polymère peut améliorer la dispersion de la charge dans le polymère et permettre ainsi l'obtention d'un matériau davantage homogène. Dans le cas de certaines charges, comme le noir de carbone ou la silice, une meilleure dispersion de la charge va généralement se traduire par une baisse d'hystérèse de la composition. Une telle propriété est recherchée, notamment dans les compositions de caoutchouc destinées par exemple à des applications pour pneumatique. Cette baisse d'hystérèse s'accompagne souvent d'une baisse de la rigidité à cuit de la composition, ce qui peut rendre la composition inadaptée à l'usage que l'on veut en faire. Il existe donc un besoin de trouver des agents de modification qui permettent à la fois de fonctionnaliser un polymère et de modifier ce compromis hystérèse rigidité à cuit d'une composition comprenant un polymère et une charge.

Parmi les réactions chimiques pour modifier un polymère insaturé, on décompte les réactions de greffage d'un composé. Des composés connus pour se greffer sur un polymère insaturé sont par exemple des composés 1,3-dipolaires tels que décrits dans les demandes de brevet WO 2006/045088 et WO 2012/007441. La première demande décrit des composés qui permettent le greffage de fonction oxazoline, thiazoline, alcoxysilane ou allylétain. La seconde décrit des composés qui permettent le greffage de fonctions associatives azotées. Mais aucune de ces demandes ne décrit ni des composés 1,3-dipolaires portant un groupe phosphate, ni le greffage de fonction phosphate sur un polymère insaturé par réaction de ces composés 1,3-dipolaires dans le but de modifier le compromis hystérèse rigidité à cuit et renforcement d'une composition comprenant le polymère en présence d'une charge. WO-A-2015/059269 décrit des compositions de caoutchouc comprenant un composé 1,3-dipolaire oxyde de nitrile, nitrone or nitrile imine portant une fonction imidazole.

Décrit est un composé 1,3-dipolaire comportant un groupe phosphoré de formule (I) et un dipôle contenant un atome d'azote,

- OP(O)(OR')(OR") (I)

R' et R", identiques ou différents, représentant un hydrogène ou un groupe carboné.

Décrit est aussi un procédé pour modifier par une réaction de greffage un polymère insaturé, lequel procédé comprend la réaction du composé 1,3-dipolaire tel que décrit sur au moins une et de préférence plusieurs insaturations du polymère insaturé.

Décrit est aussi un polymère diénique comportant le long de la chaîne polymère un ou plusieurs groupes phosphorés pendants de formule (I) dans laquelle au moins un des R' et R" est différent de H.

Décrit est aussi un polymère diénique qui a pour caractéristique essentielle de comprendre un ou plusieurs groupes phosphorés pendants de formule (I), ainsi qu'un ou plusieurs cycles isooxazoline pendants.

L'invention porte sur une composition de caoutchouc à base d'au moins un élastomère diénique, une charge renforçante comprenant une charge inorganique renforçante et le composé 1,3-dipolaire, ainsi que sur le procédé pour préparer la composition, et sur un pneumatique qui comprend la composition de caoutchouc, notamment dans sa bande de roulement.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Le terme composé 1,3-dipolaire est compris selon la définition donnée par IUPAC.

Le composé 1,3-dipolaire a pour caractéristique essentielle de comprendre un dipôle contenant un atome d'azote et un groupe phosphoré de formule (I) dans laquelle R' et R", identiques ou différents, représentant un hydrogène ou un groupe carboné,

- OP(O)(OR')(OR") (I)

On entend par groupe carboné un radical qui contient du carbone, tel qu'un groupe hydrocarboné ou un groupe contenant du carbone, de l'hydrogène et au moins un hétéroatome.

Selon un mode de réalisation de l'invention, le groupe carboné est choisi dans le groupe des alkyles, des aryles et des groupes alkylaryles.

Selon un mode de réalisation de l'invention, au moins un des R' et R" est différent de H.

Selon un mode de réalisation particulier de l'invention, R' et R" représentent indépendamment un groupe alkyle préférentiellement en C1-C12, plus préférentiellement en C1-C6. On entend par groupe en Cn un groupe qui contient n atomes de carbone, n étant un nombre entier. On entend par Cn-Cm un groupe qui contient de n à m atomes de carbone, m étant un nombre entier.

De préférence, R' et R", identiques ou différents, sont méthyle ou éthyle.

Selon l'un quelconque des modes de réalisation de l'invention, le composé 1,3-dipolaire comprend de préférence un seul groupe ester d'acide phosphorique ou un seul dipôle contenant un atome d'azote, de manière plus préférentielle un seul groupe ester d'acide phosphorique et un seul dipôle contenant un atome d'azote.

Selon l'invention, le dipôle contenant un atome d'azote est choisi dans le groupe constitué par le dipôle-C≡N→O, -le dipôle C≡N→N- et le dipôle - C=N(→+O)-. Le composé 1,3-dipolaire est choisi dans le groupe constitué par les oxydes de nitrile, les nitrones et les nitriles imine.

Selon un mode de réalisation préférentiel de l'invention, le dipôle est le dipôle -C≡N→O, auquel cas le composé 1,3-dipolaire est un oxyde de nitrile.

Selon un mode de réalisation de l'invention, le composé 1,3-dipolaire comporte le motif de formule (II) 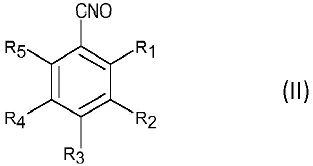 dans laquelle quatre des cinq symboles R1 à R5 identiques ou différents, sont chacun un atome ou un groupe d'atomes, préférentiellement un groupe aliphatique ou un groupe aromatique et le cinquième symbole désigne un rattachement direct ou indirect au groupe phosphoré, sachant que R1 et R5 sont tous les deux différents de H.

Selon un mode de réalisation préférentiel de l'invention, R2 ou R4 représente un rattachement direct au groupe phosphoré.

Selon un autre mode de réalisation préférentiel de l'invention, R1, R3 et R5 sont identiques.

Selon un autre mode de réalisation préférentiel de l'invention, R1, R3 et R5 sont chacun un groupe alkyle en C1-C6, préférentiellement en C1-C3. De manière plus préférentielle, R1, R3 et R5 sont chacun un méthyle ou un éthyle.

Avantageusement, le composé 1,3-dipolaire est de formule (III).

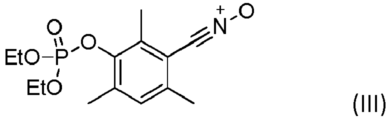

Le procédé qui permet de modifier un polymère insaturé, polymère A, par une réaction de greffage a pour caractéristique essentielle de comprendre la réaction du composé 1,3-dipolaire sur au moins une insaturation du polymère A. Le composé 1,3-dipolaire est le composé 1,3-dipolaire selon l'un quelconque des modes de réalisation de l'invention.

Le composé 1,3-dipolaire réagit de préférence sur plusieurs insaturations du polymère A, auquel cas le procédé permet la synthèse d'un polymère, polymère B, comportant plusieurs groupes phosphorés le long de la chaîne polymère. On entend par plusieurs insaturations au moins 2 insaturations.

La réaction du composé 1,3-dipolaire sur le polymère A est une réaction de cycloaddition [3+2].

Les insaturations du polymère A sont de préférence des doubles liaisons carbone-carbone.

La réaction du composé 1,3-dipolaire sur le polymère A peut être réalisé en masse, par exemple dans un mélangeur interne ou un mélangeur externe tel qu'un mélangeur à cylindres. Le mélange comportant le composé 1,3-dipolaire et le polymère A est par exemple porté à une température du mélangeur externe ou du mélangeur interne inférieure à 60°C, puis mis sous presse ou en étuve à des températures allant de 80°C à 200°C. Alternativement le mélange est porté à une température du mélangeur externe ou du mélangeur interne supérieure à 60°C sans traitement thermique postérieur.

La réaction d'addition du composé 1,3-dipolaire sur le polymère A peut également être effectué en solution. La température à laquelle est menée la réaction est facilement ajustée par l'homme du métier à partir de ses connaissances générales en tenant compte de la concentration du milieu réactionnel, de la température de reflux du solvant, de la stabilité thermique du polymère A et du composé 1,3-dipolaire. Par exemple peut convenir une température aux alentours de 60°C. Le polymère ainsi modifié, polymère B, peut être séparé de sa solution par tout type de moyen connu par l'homme de l'art et en particulier par une opération d'évaporation du solvant sous pression réduite ou par une opération de stripping à la vapeur d'eau.

Dans la réaction d'addition du composé 1,3-dipolaire sur le polymère A, on fait réagir le composé 1,3-dipolaire selon une stœchiométrie préférentielle comprise entre 0 et 5 équivalents molaires, plus préférentiellement entre 0 et 2 équivalents molaires, encore plus préférentiellement entre 0 et 1 équivalent molaire, de groupe phosphoré pour 100 moles d'unités monomères constituant le polymère A. Pour chacune de ces plages préférentielles, la borne inférieure est avantageusement d'au moins 0.1 équivalent molaire de composé 1,3-dipolaire. La quantité de composé 1,3-dipolaire utilisée est exprimée en équivalent molaire de groupe phosphoré. Par exemple, si le composé 1,3-dipolaire contient un seul groupe phosphoré, à une mole de composé 1,3-dipolaire correspond une mole de groupe phosphoré. Si le composé 1,3-dipolaire contient deux groupes phosphorés, à une mole de composé 1,3-dipolaire correspond deux moles de groupe phosphoré. Dans ce dernier cas l'utilisation du composé 1,3-dipolaire selon un équivalent molaire de groupe phosphoré correspond à une demi-mole de composé 1,3-dipolaire. Ces plages préférentielles peuvent s'appliquer à l'un quelconque des modes de réalisation de l'invention.

De manière préférentielle, que la réaction du composé 1,3-dipolaire sur le polymère A soit réalisé en solution ou en masse, le polymère A est au préalable antioxydé pour prévenir une éventuelle dégradation de la macrostructure du polymère au cours de la réaction.

Le polymère A avant de subir la réaction d'addition du composé 1,3-dipolaire présente au moins une et de préférence plusieurs insaturations qui sont susceptibles de réagir avec le composé 1,3 dipolaire

Le polymère A est de préférence un polymère diénique, plus préférentiellement un élastomère diénique. Lorsque le polymère A est un polymère diénique ou un élastomère diénique, l'homme du métier comprend que les insaturations sur lesquelles le composé 1,3-dipolaire réagit sont des doubles liaisons carbone-carbone.

Par polymère diénique, doit être compris un polymère comprenant des unités monomères diéniques, en particulier des unités de monomères 1,3-diéniques.

Par élastomère (ou indistinctement caoutchouc) "diénique", doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère d'un monomère diène conjugué, notamment tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Dans le cas de copolymères du type (b), ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Préférentiellement, l'élastomère diénique est un élastomère essentiellement insaturé choisi dans le groupe constitué par les polybutadiènes (BR), les polyisoprènes, les copolymères de butadiène, les copolymères d'isoprène, et les mélanges de ces élastomères. A titre d'élastomère diénique convient tout particulièrement un polybutadiène (BR), un copolymère de butadiène et de styrène (SBR), un caoutchouc naturel (NR) ou un polyisoprène de synthèse (IR) présentant préférentiellement un taux molaire de liaison cis-1,4 supérieur à 90%.

Décrit est également un polymère diénique, de préférence élastomère, qui comporte un ou plusieurs groupes phosphorés pendants de formule (I)

- OP(O)(OR')(OR") (I)

dans laquelle R' et R" sont définis tels que précédemment à la condition que au moins un des R' et R" est différent de hydrogène.

Décrit est également un polymère diénique qui a pour caractéristique essentielle de comprendre un ou plusieurs groupes phosphorés pendants de formule (I), ainsi qu'un ou plusieurs cycles isoxazoline pendants, structure qui résulte de la cycloaddition [3+2] du composé 1,3-dipolaire sur une double liaison carbone-carbone du polymère A. R' et R" sont définis selon l'un quelconque des modes de réalisation du composé 1,3-dipolaire. Le polymère diénique, peut être le polymère B obtenu par le procédé décrit selon l'un quelconque de ses modes de réalisation.

Le polymère B est de préférence un élastomère diénique, dit élastomère diénique B, ce qui sous-entend que le polymère B contient des unités diéniques et comporte donc, par définition d'un élastomère diénique, des doubles liaisons carbone-carbone.

La composition, objet de l'invention, est à base au moins d'un élastomère diénique, élastomère C, d'une charge renforçante comprenant une charge inorganique renforçante et du composé 1,3-dipolaire conforme à l'invention.

Selon l'un quelconque des modes de réalisation de l'invention, l'élastomère C est de préférence un élastomère essentiellement insaturé choisi dans le groupe constitué par les polybutadiènes, les polyisoprènes, les copolymères de butadiène, les copolymères d'isoprène et les mélanges de ces élastomères.

On entend par charge renforçante des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon l'un quelconque des modes de réalisations de l'invention, la charge inorganique renforçante représente préférentiellement plus de 50% en masse de la masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Le taux de charge inorganique renforçante est compris préférentiellement entre 30 et 160 pce, plus préférentiellement entre 40 pce et 160 pce. En deçà de 30 pce, le renforcement de la composition de caoutchouc peut être insuffisant pour apporter un niveau de cohésion ou de résistance à l'usure adéquats du composant caoutchouteux du pneumatique comprenant cette composition. De manière encore plus préférentielle, le taux de charge inorganique renforçante est d'au moins 50 pce. Au-delà de 160 pce, il existe un risque d'augmentation de l'hystérèse et donc de la résistance au roulement des pneumatiques. Pour cette raison, le taux de charge inorganique renforçante est de préférence dans un domaine allant de 50 à 120 pce, notamment pour un usage dans une bande de roulement de pneumatique. L'une quelconque de ces plages préférentielles de taux de charge inorganique renforçante s'applique à l'un quelconque des modes de réalisation de l'invention.

Pour coupler la charge inorganique renforçante à l'élastomère C, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z-A-Sₓ-A-Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 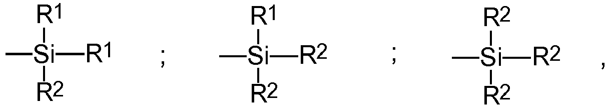 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des résines plastifiantes hydrocarbonées présentant une haute Tg, de préférence supérieure à 30°C, telles que décrites par exemple dans les demandes WO 2005/087859, WO 2006/061064 et WO 2007/017060, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation, des accélérateurs ou retardateurs de vulcanisation, des activateurs de vulcanisation. Le système de réticulation est de préférence à base de soufre, mais il peut être également à base de donneurs de soufre, de peroxyde, de bismaléimides ou de leurs mélanges.

La quantité de composé 1,3-dipolaire dans la composition de caoutchouc est comprise entre 0 et 5 équivalents molaires, préférentiellement entre 0 et 2 équivalents molaires, plus préférentiellement entre 0 et 1 équivalent molaire, de groupe phosphoré pour 100 moles d'unités monomères constituant l'élastomère C.

Selon un mode de réalisation particulier de l'invention, le composé 1,3-dipolaire est pré-greffé sur l'élastomère diénique C, par exemple selon le procédé de greffage conforme à l'invention, auquel cas l'élastomère diénique C et le composé 1,3-dipolaire forment à eux deux dans la composition de caoutchouc un composant, en l'espèce un élastomère diénique modifié par réaction de greffage du composé 1,3-dipolaire.

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer la composition de caoutchouc conforme à l'invention qui comprend en outre un système de réticulation comprend les étapes suivantes :
- ajouter au cours d'une première étape dite non productive à l'élastomère diénique C, le composé 1,3-dipolaire, la charge inorganique renforçante, le cas échéant l'agent de couplage, en malaxant thermomécaniquement jusqu'à atteindre une température maximale comprise entre 130 et 200°C, le composé 1,3-dipolaire étant éventuellement pré-greffé sur l'élastomère C,
- refroidir l'ensemble à une température inférieure à 100°C,
- incorporer ensuite le système de réticulation,
- malaxer le tout jusqu'à une température maximale inférieure à 120°C.

Lorsque le composé 1,3-dipolaire est pré-greffé sur l'élastomère C, le composé 1,3-dipolaire et l'élastomère diénique sont mis en contact ensemble avant d'être mise en contact avec les autres constituants de la composition de caoutchouc. Ce contact préalable permet au composé 1,3-dipolaire de réagir sur les doubles liaisons carbone-carbone de l'élastomère C. Le produit de réaction est un élastomère diénique dont une partie des unités diéniques ont réagi avec le composé 1,3-dipolaire par cycloaddition [2+3]. Par conséquent c'est le produit de réaction qui entre dans la composition de caoutchouc et non l'élastomère C et le composé 1,3-dipolaire

Le greffage peut être effectué en solution en continu ou en discontinu. L'élastomère diénique ainsi modifié peut être séparé de sa solution par tout type de moyen connu par l'homme de l'art et en particulier par une opération de stripping à la vapeur d'eau.

Le greffage du composé 1,3-dipolaire peut être également réalisé en masse, par exemple dans un mélangeur interne ou un mélangeur externe tel qu'un mélangeur à cylindres. Le greffage est alors mis en œuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur. Lorsque le greffage est réalisé en masse, il est réalisé préférentiellement en présence d'un antioxydant, généralement ajouté à la fin de la synthèse de l'élastomère C diénique comme cela se fait conventionnellement.

Ainsi, un mode préférentiel de réalisation du procédé comprend les étapes suivantes :
- ajouter au cours d'une première étape dite non productive à l'élastomère diénique C, le composé 1,3-dipolaire en malaxant thermomécaniquement,
- ajouter ensuite la charge renforçante, le cas échéant un agent de couplage en malaxant thermomécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

Le temps de contact entre l'élastomère diénique C et le composé 1,3-dipolaire qui sont malaxés thermomécaniquement est ajusté en fonction des conditions du malaxage thermomécanique, notamment en fonction de la température. Plus la température du malaxage est élevée, plus ce temps de contact est court. Typiquement il est de 1 à 5 minutes pour une température de 100 à 130°C.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique, notamment une bande de roulement pour pneumatique.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Analyse RMN :

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde " large bande " BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans le diméthylsulfoxide deutéré (DMSO), sauf indication contraire. Ce solvant est également utilisé pour le signal de lock, sauf indication contraire.

Lorsque le DMSO deutéré est utilisé comme solvant, la calibration pour l'analyse RMN est réalisée sur le signal des protons du DMSO deutéré à 2.44 ppm et sur les carbones du DMSO deutéré à 39.5 ppm par rapport à une référence TMS à 0ppm.

Le spectre RMN ¹H couplé aux expériences 2D HSQC ¹H/13C et HMBC ¹H/¹³C permettent la détermination structurale des molécules (cf tableaux d'attributions). Les quantifications molaires sont réalisées à partir du spectre RMN 1D ¹H quantitatif.

### Essais de traction :

Ces essais de traction permettent de déterminer les contraintes d'élasticité. Sauf indication différente, ils sont effectués conformément à la norme française NF T 46-002 de septembre 1988. Un traitement des enregistrements de traction permet également de tracer la courbe de module en fonction de l'allongement. On mesure en première élongation les modules sécants nominaux calculés en se ramenant à la section initiale de l'éprouvette (ou contrainte apparente, en MPa) à 100% et 300% d'allongement notés MSA100 et MSA300 respectivement.

Toutes ces mesures de traction sont effectuées dans les conditions normales de température (23 ± 2°C) selon la norme NF T 46-002.

Les modules MSA100 et MSA300 sont exprimés en base 100 par rapport à la composition témoin. Une valeur supérieure à 100 traduit une augmentation du module.

L'indice de renforcement qui est le rapport du module MSA300 sur le module MSA100, est exprimé en base 100 par rapport à la composition témoin. Une valeur supérieure à 100 traduit une amélioration du renforcement de la composition considérée par rapport à la composition témoin.

### Propriétés dynamiques :

Les propriétés dynamiques tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont l'écart de module (ΔG*) entre les valeurs à 0,1 et 100% de déformation (effet Payne), le module complexe de cisaillement dynamique (G*) à 25% de déformation et la valeur maximale de tanδ observée pour le cycle retour, notée tan(δ)max.

Les valeurs de ΔG* sont exprimées en base 100 par rapport au témoin : une valeur inférieure à 100 traduit une diminution de l'écart de module, soit une augmentation de la linéarisation de la composition de caoutchouc.

Les valeurs de G* sont exprimées en base 100 par rapport au témoin : une valeur supérieure à 100 traduit une augmentation du module, soit une augmentation de la rigidité de la composition de caoutchouc

Les valeurs de tan(δ)max sont exprimées en base 100 par rapport au témoin : une valeur inférieure à 100 traduit une diminution de la valeur maximale du facteur de perte, soit une diminution de l'hystérèse de la composition de caoutchouc.

### II.2-Synthèse du composé 1,3-dipolaire 3-(diéthoxyphosphoryloxy)-2,4,6-triméthylbenzonitrile oxide :

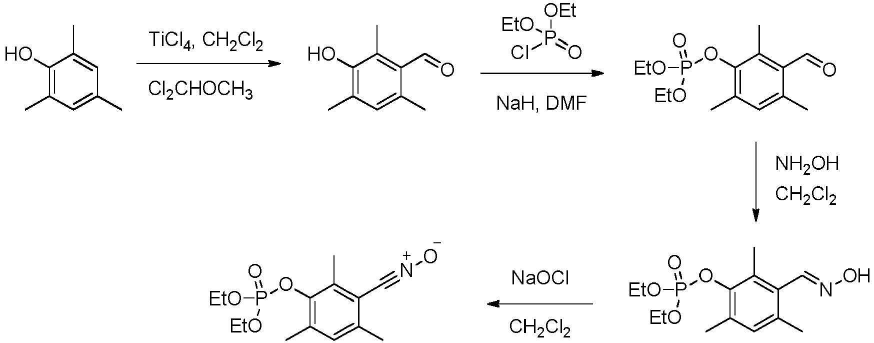

La préparation du composé 3-hydroxy-2,4,6-trimethylbenzaldéhyde est décrite dans l'article Yabukov, A. P. ; Tsyganov, D.V. ; Belen'kii, L.I. ; Krayushkin, M. M.; Bulletin of the Academy of Sciences of the USSR, Division od Chemical Science (English Translation) ; vol. 40; nb 7.2; (1991); p. 1427-1432*;* Izvestiya Akademii Nauk SSSR, Seriya Khimicheskaya ; nb. 7 (1991); p 1609-1615*.*

### 11.2-1-Synthèse du diéthyl (3-formyl-2,4,6-triméthylphényl)phosphate :

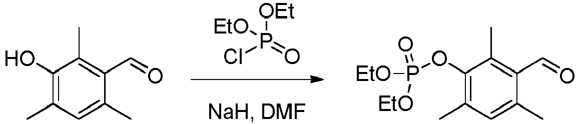

À une solution de 3-hydroxy-2,4,6-triméthylbenzaldehyde (5,206 g, 0,032 mol) dans le diméthylformamide (DMF) (100 mL) est ajouté de l'hydrure de sodium (60 % en masse de NaH dans huile minérale, 1,4 g, 0,0348 mol) en trois fois (sous argon). Le milieu réactionnel est chauffé à 40 °C pendant 1 heure (l'hydrure de sodium doit réagir complètement). Puis une solution de diéthylchlorophosphate (5,744 g, 0,033 mol) dans le DMF (10 mL) est ajoutée goutte à goutte au milieu réactionnel. Celui-ci est chauffé à 115-120 °C. Après 8 heures, le milieu réactionnel est refroidi jusqu'à 20°C et versé dans 1 L d'eau glaciale. La phase aqueuse est extraite par CH₂Cl₂ (3 fois par 150 mL). La phase organique est lavée par de l'eau, puis par une solution saturée de NaCl, séchée sur MgSO₄ et concentrée sous pression réduite. Une huile brune (10,941 g, 0,036 mol, rendement 100 %) est obtenue. La pureté molaire est supérieure à 70 % (RMN ¹H). L'analyse RMN est réalisée en utilisant l'acétone-d6 (calibration sur le signal de l'acétone à 1,98 ppm en ¹H et 29,8ppm en ¹³C) comme solvant. Un signal en RMN du ³¹P est observé à - 6 ppm.

Ce produit est utilisé dans l'étape suivante sans purification.

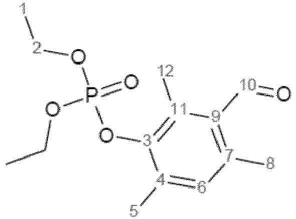

| Atome | δ ¹H (ppm) | δ ¹³c(ppm) |
|---|---|---|
| 1 | 1.25 | 16.4 |
| 2 | 4.13 | 65.1 |
| 3 | - | 147.6 |
| 4 | - | ? |
| 5 | 2.49 | 13.3 |
| 6 | 6.97 | 132.5 |
| 7 | - | ? |
| 8 | 2.44 | 19.6 |
| 9 | - | 132.7 |
| 10 | 10.46 | 193.7 |
| 11 | - | ? |
| 12 | 2.31 | 17.9 |

### 11.2-2-Synthèse du diéthyl 3-((hydroxyimino)méthyl)-2,4,6-triméthylphénylphosphate :

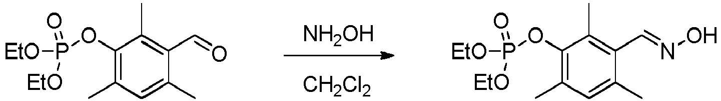

A un mélange de diéthyl 3-formyl-2,4,6-triméthylphényl phosphate (15,48 g, 0,052 mol) dans EtOH (100 mL) est ajoutée une solution d'hydroxylamine (5,10 g 0,155 mol = 10,20 g 50 % dans l'eau, Aldrich). Le milieu réactionnel est agité pendant 24 heures à 23°C. De l'eau froide (1.5 L) est ensuite ajoutée au milieu réactionnel. Le précipité obtenu est filtré et lavé sur le filtre par l'eau (1 L). Le produit obtenu est séché sous pression atmosphérique à température ambiante. Un solide blanc (14,36 g, 0,045 mol, rendement 88 %) est obtenu. La pureté molaire est supérieure à 90 % (RMN ¹H). Un signal en RMN du ³¹P est observé à - 6 ppm.

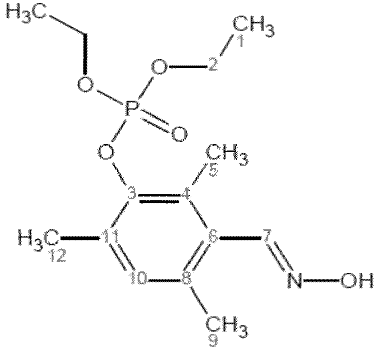

| **N°** | **δ ¹H (ppm)** | **δ ¹³C (ppm)** |
|---|---|---|
| 1 | 1,19 | 16,2 |
| 2 | 4,07 | 64,6 |
| 3 | / | 145,9 |
| 4,6,8,11 | / | 129,5 + 130,8 + 133,1 + 133,4 |
| 5 | 2,20 | 14,5 |
| 7 | 8,21 | 147,7 |
| 9 | 2,20 | 20,4 |
| 10 | 6,92 | 130,8 |
| 12 | 2,20 | 17,1 |
| OH | 11,20 | / |

### 11.2-3-Synthèse du 3-(diéthoxyphosphoryloxy)-2,4,6-triméthylbenzonitrile oxide :

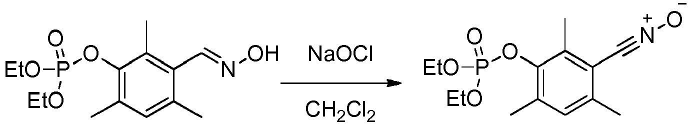

A une suspension de 3-(diéthylphosphate)-2,4,6-triméthylbenzaldehyde (32,30 g, 0,102 mol) dans CH₂Cl₂ (700 mL) refroidie jusqu'à - 5 °C, est ajoutée de l'eau de Javel (solution de NaOCl, 160 mL / 4,3 - 4,5 % Cl₂, Aldrich) goutte à goutte sous vive agitation. Le mélange réactionnel est agité pendant 35 minutes à - 5 °C. Puis la phase organique est lavée par de l'eau, séchée sur Na₂SO₄ et concentrée sous pression réduite pour conduire à une huile qui cristallise à - 18 °C après 2 h. Apres une recristallisation dans l'éther de pétrole (200-250 ml, fractions 40/60), un solide pale-jaune (26,09 g, 0,083 mol, rendement 81 %) de point de fusion 55 °C est obtenu. La pureté molaire est supérieure à 99 % (RMN ¹H). Un signal en RMN du ³¹P est observé à - 5.9 ppm.

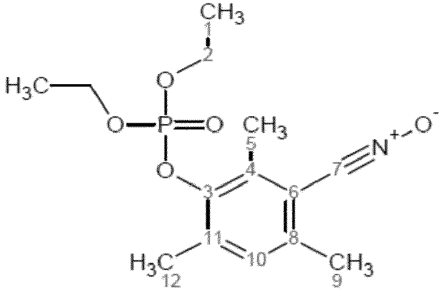

| **N°** | **δ ¹H (ppm)** | **δ ¹³C (ppm)** |
|---|---|---|
| 1 | 1,20 | 15,6 |
| 2 | 4,09 | 64,2 |
| 3 | / | 145,3 |
| 4/8/11 | / | 132,9 + 133,5 + 138,1 |
| 5 | 2,31 | 15,3 |
| 6 | / | 112,4 |
| 7 | / | / |
| 9 | 2,29 | 19,3 |
| 10 | 7,09 | 130,2 |
| 12 | 2,23 | 16,7 |

### II.3-Greffage du composé 1,3-dipolaire 3-(2-éthoxy-2-oxoéthoxy)-2,4,6-triméthylbenzonitrile oxide sur un polymère par cycloaddition [2+3] :

On utilise le composé 1,3-dipolaire obtenu selon le mode opératoire décrit ci-dessus. La réaction de greffage est mise en évidence par analyse RMN ¹H réalisée sur des échantillons solubilisés dans le disulfure de carbone, en présence de cyclohexane deutéré C₆D₆ pour le signal de lock.

### Greffage sur un SBR :

Le polymère est un SBR qui contient 25% de motif styrène et 58% de motif 1,2 de la partie butadiénique.

On incorpore le composé 1,3-dipolaire (0,71g, 2,26 mmol), de pureté RMN de 99%mol, à 50g de SBR sur outil à cylindres (mélangeur externe à 30°C). Le mélange est homogénéisé en 15 passes portefeuille. Cette phase de mélangeage est suivie d'un traitement thermique à 120°C pendant 10 minutes sous presse à 10 bars de pression. L'analyse par RMN ¹H a permis de déterminer un taux molaire d'addition du composé 1,3-dipolaire de 0.30%mol et un rendement molaire d'addition de 98%.

### Greffage sur un IR :

Le polymère est un IR « Nipol ® IR2200» qui contient 97% de liaison 1,4-cis.

On incorpore le composé 1,3-dipolaire (0,68 g, 2,21 mmol), de pureté RMN de 99%mol, à 50g de IR sur outil à cylindres (mélangeur externe à 30°C). Le mélange est homogénéisé en 15 passes portefeuille. Cette phase de mélangeage est suivie d'un traitement thermique à 120°C pendant 10 minutes sous presse à 10 bars de pression. L'analyse par RMN ¹H a permis de déterminer un taux molaire d'addition du composé 1,3-dipolaire de 0.27%mol et un rendement molaire d'addition de 90%.

### II.4-Préparation des compositions de caoutchouc :

On utilise le composé 1,3-dipolaire dont la synthèse est décrite ci-dessus.

Les formulations (en pce) des compositions A et B décrites dans le tableau I. Les compositions A et B à base de SBR et de silice diffèrent en ce que la composition B contient le composé 1,3-dipolaire. La composition B est conforme à l'invention, la composition A n'est pas conforme à l'invention et est la composition témoin de la composition B.

On procède pour la fabrication de ces compositions de la manière suivante : on introduit dans un mélangeur interne (taux de remplissage final : environ 70% en volume), dont la température initiale de cuve est d'environ 110°C, l'élastomère, le cas échéant le composé 1,3-dipolaire qui est malaxé seul avec l'élastomère pendant 1 minute à 120°C, puis la silice, l'agent de couplage, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 25°C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement. La réticulation est effectuée à 150°C.

### II.5-Essais de caractérisation - Résultats :

Les résultats sont consignés dans le tableau (II) ci-après.

Comparativement à la composition témoin A, la composition B conforme à l'invention présente à la fois un indice de renforcement MSA300/MSA100 supérieur, un tanδ max et un ΔG* très inférieurs sans qu'il ne soit observé une diminution du module G*. L'amélioration de l'indice de renforcement de la composition B traduit une amélioration de la cohésion de la composition B comparativement à la composition A. La composition B présente un meilleur compromis de propriétés que sont la rigidité, la cohésion et l'hystérèse. Ce résultat est surprenant, car généralement une forte diminution d'hystérèse s'accompagne d'une diminution de la rigidité.

**Tableau I**

| Composition | A témoin | B conforme |
|---|---|---|
| IR (1) | 100 | 100 |
| Composé 1,3-dipolaire (2) | - | 1.38 |
| Noir de carbone N234 | 3 | 3 |
| Silice (3) | 55 | 55 |
| Silane (4) | 5.5 | 5.5 |
| Antioxydant (5) | 2.5 | 2.5 |
| Paraffine | 1 | 1 |
| ZnO | 2.5 | 2.5 |
| Acide stéarique | 2.5 | 2.5 |
| Sulfénamide (6) | 1.8 | 1.8 |
| Soufre | 1.5 | 1.5 |

| | | |
|---|---|---|
| (1) « Nipol ® IR2200 » (2) Composé 1,3-dipolaire dont la synthèse est décrite ci-dessus dans le paragraphe II.2 (3) Silice « Zeosil 1165 MP » de la société Rhodia (type HDS) (4) TESPT (« Si69 » de la société Degussa) (5) Mélange de N-(l,3-diméthylbutyl)-N'-phényl-p-phénylènediamine, de la société Flexsys et tétraméthylquinone selon un ratio pondéral 60/40 (6) N-cyclohexyl-2-benzothiazol-sulfénamide (« Santocure CBS » de la société Flexsys) | | |

**Tableau (II)**

| **Composition** | A | B |
|---|---|---|
| **Propriétés à cuit** | | |
| MSA100 | 100 | 95 |
| MSA300 | 100 | 105 |
| MSA300/MSA100 | 100 | 110 |
| G* | 100 | 101 |
| tanδ max | 100 | 76 |
| ΔG* | 100 | 47 |

## Revendications

1. Composition de caoutchouc à base au moins d'un élastomère diénique, d'une charge renforçante comprenant une charge inorganique renforçante et d'un composé 1,3-dipolaire, laquelle composition comprend un système de réticulation, le composé 1,3-dipolaire comportant un groupe phosphoré de formule (I) et un dipôle contenant un atome d'azote et choisi dans le groupe constitué par le dipôle-C≡N→O, le dipôle C≡N→N- et le dipôle -C=N(→O)-
- OP(O)(OR')(OR") (I)
R' et R", identiques ou différents, représentant un hydrogène ou un groupe carboné.

2. Composition de caoutchouc selon la revendication 1 dans laquelle le groupe carboné est choisi dans le groupe des alkyles, des aryles et des groupes alkylaryles.

3. Composition de caoutchouc selon l'une quelconque des revendications 1 à 2 dans laquelle au moins un des R' et R" est différent de H.

4. Composition de caoutchouc selon l'une quelconque des revendications 1 à 3 dans laquelle R' et R" représentent indépendamment un groupe alkyle préférentiellement en C1-C12, plus préférentiellement en C1-C6.

5. Composition de caoutchouc selon la revendication 4 dans laquelle R' et R" représentent indépendamment méthyle ou éthyle.

6. Composition de caoutchouc selon l'une quelconque des revendications 1 à 5 dans laquelle le composé 1,3-dipolaire comporte le motif de formule (II) : 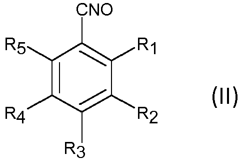 dans laquelle quatre des cinq symboles R1 à R5 identiques ou différents, sont chacun un atome ou un groupe d'atomes, préférentiellement un groupe aliphatique ou un groupe aromatique et le cinquième symbole désigne un rattachement direct ou indirect au groupe phosphoré, sachant que R1 et R5 sont tous les deux différents de H.

7. Composition de caoutchouc selon la revendication 6 dans laquelle R1, R3 et R5 sont chacun un groupe alkyle de 1 à 6 atomes de carbone, préférentiellement de 1 à 3 atomes de carbone.

8. Composition de caoutchouc selon la revendication 7 dans laquelle le composé 1,3-dipolaire est de formule (III).

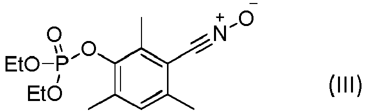

9. Composition de caoutchouc selon l'une quelconque des revendications 1 à 8 dans laquelle la charge inorganique est une silice.

10. Composition de caoutchouc selon l'une quelconque des revendications 1 à 9 dans laquelle la quantité de composé 1,3-dipolaire est comprise entre 0 et 5 équivalents molaires, préférentiellement entre 0 et 2 équivalents molaires, plus préférentiellement entre 0 et 1 équivalent molaire, de groupe phosphoré pour 100 moles d'unités monomères constituant l'élastomère diénique.

11. Composition de caoutchouc selon l'une quelconque des revendications 1 à 10, dans laquelle le système de réticulation est à base de soufre.

12. Procédé pour préparer une composition de caoutchouc définie selon l'une quelconque des revendications 1 à 11, lequel procédé comprend les étapes suivantes :
- ajouter au cours d'une première étape dite non productive à l'élastomère diénique, le composé 1,3-dipolaire, la charge renforçante, le cas échéant un agent de couplage en malaxant thermomécaniquement jusqu'à atteindre une température maximale comprise entre 130 et 200°C, le composé 1,3-dipolaire étant éventuellement pré-greffé sur l'élastomère,
- refroidir l'ensemble à une température inférieure à 100°C,
- incorporer ensuite le système de réticulation,
- malaxer le tout jusqu'à une température maximale inférieure à 120°C.

13. Procédé selon la revendication 12, lequel procédé comprend les étapes suivantes :
- ajouter au cours d'une première étape dite non productive à l'élastomère diénique, le composé 1,3-dipolaire en malaxant thermomécaniquement,
- ajouter ensuite la charge renforçante, le cas échéant un agent de couplage en malaxant thermomécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

14. Pneumatique qui comprend une composition de caoutchouc selon l'une quelconque des revendications 1 à 11, préférentiellement dans sa bande de roulement.

15. Composé 1,3-dipolaire tel que défini selon l'une quelconque des revendications 1 à 8 dans lequel le dipôle est le dipôle-C≡N→O.

## Patentansprüche

1. Kautschukzusammensetzung auf Basis von mindestens einem Dienelastomer, einem verstärkenden Füllstoff, der einen anorganischen verstärkenden Füllstoff umfasst, und einer 1,3-dipolaren Verbindung, wobei die Zusammensetzung ein Vernetzungssystem umfasst, wobei die 1,3-dipolare Verbindung eine phosphorhaltige Gruppe der Formel (I) und einen Dipol, der ein Stickstoffatom enthält und aus der Gruppe bestehend aus dem Dipol -C≡N→O, dem Dipol -C≡N→N- und dem Dipol -C=N(→O)-ausgewählt ist, umfasst,
-OP (O) (OR') (OR'') (I)
wobei R' und R'' gleich oder verschieden sind und für Wasserstoff oder eine kohlenstoffhaltige Gruppe stehen.

2. Kautschukzusammensetzung nach Anspruch 1, wobei die kohlenstoffhaltige Gruppe aus der Gruppe der Alkyl-, Aryl- und Alkylarylgruppen ausgewählt ist.

3. Kautschukzusammensetzung nach einem der Ansprüche 1 bis 2, wobei mindestens eine der Variablen R' und R'' von H verschieden ist.

4. Kautschukzusammensetzung nach einem der Ansprüche 1 bis 3, wobei R' und R'' unabhängig für eine Alkylgruppe, vorzugsweise eine C1-C12-Alkylgruppe, weiter bevorzugt eine C1-C6-Alkylgruppe, stehen.

5. Kautschukzusammensetzung nach Anspruch 4, wobei R' und R'' unabhängig für Methyl oder Ethyl stehen.

6. Kautschukzusammensetzung nach einem der Ansprüche 1 bis 5, wobei die 1,3-dipolare Verbindung die Einheit der Formel (II) umfasst: 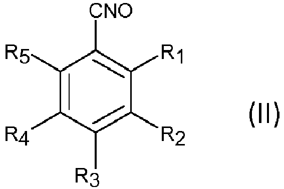 wobei vier der fünf Symbole R1 bis R5 gleich oder verschieden sind und jeweils für ein Atom oder eine Gruppe von Atomen, vorzugsweise eine aliphatische Gruppe oder eine aromatische Gruppe, stehen und das fünfte Symbol für eine direkte oder indirekte Verknüpfung mit der phosphorhaltigen Gruppe steht, mit der Maßgabe, dass R1 und R5 beide von H verschieden sind.

7. Kautschukzusammensetzung nach Anspruch 6, wobei R1, R3 und R5 jeweils für eine Alkylgruppe mit 1 bis 6 Kohlenstoffatomen, vorzugsweise mit 1 bis 3 Kohlenstoffatomen, stehen.

8. Kautschukzusammensetzung nach Anspruch 7, wobei die 1,3-dipolare Verbindung die Formel (III) aufweist.

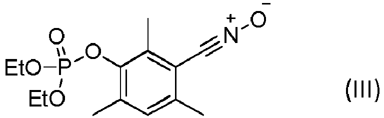

9. Kautschukzusammensetzung nach einem der Ansprüche 1 bis 8, wobei es sich bei dem anorganischen Füllstoff um eine Kieselsäure handelt.

10. Kautschukzusammensetzung nach einem der Ansprüche 1 bis 9, wobei die Menge an 1,3-dipolarer Verbindung zwischen 0 und 5 Moläquivalenten, vorzugsweise zwischen 0 und 2 Moläquivalenten, weiter bevorzugt zwischen 0 und 1 Moläquivalent, der phosphorhaltigen Gruppe pro 100 mol Monomereinheiten, aus denen das Dienelastomer aufgebaut ist, liegt.

11. Kautschukzusammensetzung nach einem der Ansprüche 1 bis 10, wobei das Vernetzungssystem auf Schwefel basiert.

12. Verfahren zur Herstellung einer Kautschuk Zusammensetzung nach einem der Ansprüche 1 bis 11, wobei das Verfahren die folgenden Schritte umfasst:
- im Lauf eines ersten, als nichtproduktiv bezeichneten Schritts Zugeben der 1,3-dipolaren Verbindung, des verstärkenden Füllstoffs und gegebenenfalls eines Kupplungsmittels zu dem Dienelastomer durch thermomechanisches Kneten bis zum Erreichen einer Höchsttemperatur zwischen 130 und 200 °C, wobei die 1,3-dipolare Verbindung gegebenenfalls vorher auf das Elastomer aufgepfropft wird,
- Abkühlen des Ganzen auf eine Temperatur von weniger als 100 °C,
- anschließendes Einarbeiten des Vernetzungssystems,
- Kneten des Ganzen bis zu einer Höchsttemperatur von weniger als 120 °C.

13. Verfahren nach Anspruch 12, wobei das Verfahren die folgenden Schritte umfasst:
- im Lauf eines ersten, als nichtproduktiv bezeichneten Schritts Zugeben der 1,3-dipolaren Verbindung zu dem Dienelastomer durch thermomechanisches Kneten,
- anschließendes Zugeben des verstärkenden Füllstoffs und gegebenenfalls eines Kupplungsmittels durch thermomechanisches Kneten bis zum Erreichen einer Höchsttemperatur zwischen 130 und 200 °C,
- Abkühlen des Ganzen auf eine Temperatur von weniger als 100 °C,
- anschließendes Einarbeiten des Vernetzungssystems,
- Kneten des Ganzen bis zu einer Höchsttemperatur von weniger als 120 °C.

14. Reifen, der eine Kautschukzusammensetzung nach einem der Ansprüche 1 bis 11 umfasst, vorzugsweise in seiner Lauffläche.

15. 1,3-Dipolare Verbindung gemäß einem der Ansprüche 1 bis 8, wobei sich bei dem Dipol um den Dipol -C≡N→O handelt.

## Claims

1. Rubber composition based on at least a diene elastomer, a reinforcing filler comprising an inorganic reinforcing filler and a 1,3-dipolar compound defined according to any one of Claims 1 to 12, said composition comprising a crosslinking system, the 1,3-dipolar compound comprising a phosphorus-containing group of formula (I) and a dipole containing a nitrogen atom .
OP(O)(OR')(OR") (I)
R' and R", which may be identical or different, representing a hydrogen or a carbon-containing group.

2. Rubber composition according to Claim 1, in which the carbon-containing group is selected from the group of the alkyls, the aryls and the alkaryl groups.

3. Rubber composition according to either of Claims 1 or 2, in which at least one of R' and R" is different from H.

4. Rubber composition according to any one of Claims 1 to 3, in which R' and R" represent independently an alkyl group, preferably C1-C12, more preferably C1-C6.

5. Rubber composition according to Claim 4, in which R' and R" represent independently methyl or ethyl.

6. Rubber composition according to any one of Claims 1 to 5 that comprises the unit of formula (II): 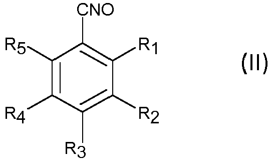 in which:
four of the five symbols R1 to R5, which may be identical or different, are each an atom or a group of atoms, preferably an aliphatic group or an aromatic group and the fifth symbol denotes a direct or indirect attachment to the phosphorus-containing group, knowing that R1 and R5 are both different from H.

7. Rubber composition according to Claim 6, in which R1, R3 and R5 are each an alkyl group with 1 to 6 carbon atoms, preferably with 1 to 3 carbon atoms.

8. Rubber composition according to Claim 7 in which the 1,3-dipolar compound is of formula (III)

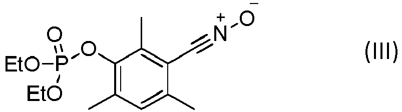

9. Rubber composition according to any one of Claims 1 to 8, in which the inorganic filler is a silica.

10. Rubber composition according to any one of Claims 1 to 9, in which the amount of 1,3-dipolar compound is between 0 and 5 molar equivalents, preferably between 0 and 2 molar equivalents, more preferably between 0 and 1 molar equivalent, of phosphorus-containing group per 100 moles of monomer units constituting the diene elastomer.

11. Rubber composition according to any one of Claims 1 to 10, in which the crosslinking system is based on sulphur.

12. Method for preparing a rubber composition defined according to any one of Claims 1 to 11, said method comprising the following steps:
- during a first so-called non-productive step, adding the 1,3-dipolar compound, the reinforcing filler, and if applicable a coupling agent to the diene elastomer, kneading thermomechanically until a maximum temperature between 130 and 200°C is reached, the 1,3-dipolar compound optionally being pre-grafted on the elastomer,
- cooling the mixture to a temperature below 100°C,
- then incorporating the crosslinking system,
- kneading the whole up to a maximum temperature below 120°C.

13. Method according to Claim 12, said method comprising the following steps:
- during a first so-called non-productive step, adding the 1,3-dipolar compound to the diene elastomer, kneading thermomechanically,
- then adding the reinforcing filler, and if applicable a coupling agent, kneading thermomechanically until a maximum temperature between 130 and 200°C is reached,
- cooling the mixture to a temperature below 100°C,
- then incorporating the crosslinking system,
- kneading the whole up to a maximum temperature below 120°C.

14. Tyre that comprises a rubber composition according to any one of Claims 1 to 11, preferably in its tread.

15. 1,3-Dipolar compound as defined in any one of Claims 1 to 8 in which the dipole is the dipole -C≡N→O.
